# DEMANDE DE BREVET EUROPEEN

(11) **EP 2 072 328 A1**
(43) Date de publication de la demande: **24.06.2009**
(21) Numéro de dépôt: 08172583.0
(22) Date de dépôt: 22.12.2008
(51) Int. Cl.: B60N 2/68, B60N 2/70

(54) **Siège notamment de véhicules**

(30) Priorité: 20.12.2007 FR 0760089
(71) Demandeur: Sarl Lecorney, 70000 Vesoul (FR)
(72) Inventeur: Keller, Thierry, 25000 Besançon (FR)
(74) Mandataire: Bentz, Jean-Paul

(57) **Abrégé**

Siège (1) notamment de véhicules, comportant accessoirement un appui-tête et/ou au moins un accoudoir, lequel siège est constitué d'une assise (2) et d'un dossier (3) monobloc ou articulé entre eux et comportant des éléments de confort, l'ensemble étant recouvert d'une housse (4), **caractérisé en ce que** l'assise (2) et le dossier (3) sont formés par une carcasse rigide (5) en matière plastique, réalisés en une ou deux parties, les éléments de confort (6) étant disposés dans des zones déterminées de la housse (4), préalablement à son montage sur la carcasse (5), pour constituer un sous-ensemble déhoussable amovible et interchangeable.

## Description

La présente invention concerne un siège notamment de véhicules, comportant accessoirement un appui-tête et/ou au moins un accoudoir, lequel siège est constitué d'une assise et d'un dossier monobloc ou articulé entre eux et comportant des éléments de confort, l'ensemble étant recouvert d'une housse.

Ce type de siège est destiné à l'équipement intérieur de véhicules, notamment automobiles, qu'ils soient de tourisme, utilitaires ou de loisirs, utilisables avec ou sans permis, mais il est également destiné aux bateaux ou engins forestiers et agricoles, en fait à tout type de siège.

D'une manière générale, le problème posé, plus particulièrement lorsqu'il s'agit d'un siège pour véhicules économiques et légers, destinés par exemple aux voiturettes de ville, est relatif au poids de celles-ci, et subséquemment à la consommation de carburant et au coût.

Selon une première phase de la démarche inventive, il a donc été recherché d'alléger l'équipement de la voiture, en l'occurrence le/les sièges, afin de réduire le coût ainsi que la consommation du véhicule.

Un autre problème, plus particulièrement sensible dans les véhicules professionnels ou les bateaux, réside dans le fait qu'il a pu être constaté une précocité d'usure au niveau de la housse ou tout au moins au niveau de son salissement.

Lorsque dans un siège traditionnel, la housse fait partie intégrante du siège, ou pour le moins ses éléments de confort, il n'est pas aisé de nettoyer ceux-ci, voire les remplacer, sans une intervention lourde et donc onéreuse, du fait de leur démontage et leur remontage difficiles, parfois impossibles.

De plus, la conception des sièges traditionnels prévoit une carcasse métallique assortie parfois de ressorts de confort, alourdissant notablement l'ensemble du siège, se répercutant tant sur le poids que sur son prix de revient, tout en ayant une répercussion sur la consommation du véhicule.

La présente invention a pour but de remédier à l'ensemble de ces inconvénients en concevant un siège léger, confortable, économique, d'un entretien facile et aisément restaurable si besoin.

A cet effet, l'invention concerne un siège notamment de véhicules, comportant accessoirement un appui-tête et/ou au moins un accoudoir, lequel siège est constitué d'une assise et d'un dossier monobloc ou articulé entre eux et comportant des éléments de confort, l'ensemble étant recouvert d'une housse, caractérisé en ce que l'assise et le dossier sont formés par une carcasse rigide en matière plastique, réalisés en une ou deux parties, les éléments de confort étant disposés dans des zones déterminées de la housse, préalablement à son montage sur la carcasse, pour constituer un sous-ensemble déhoussable amovible et interchangeable.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:

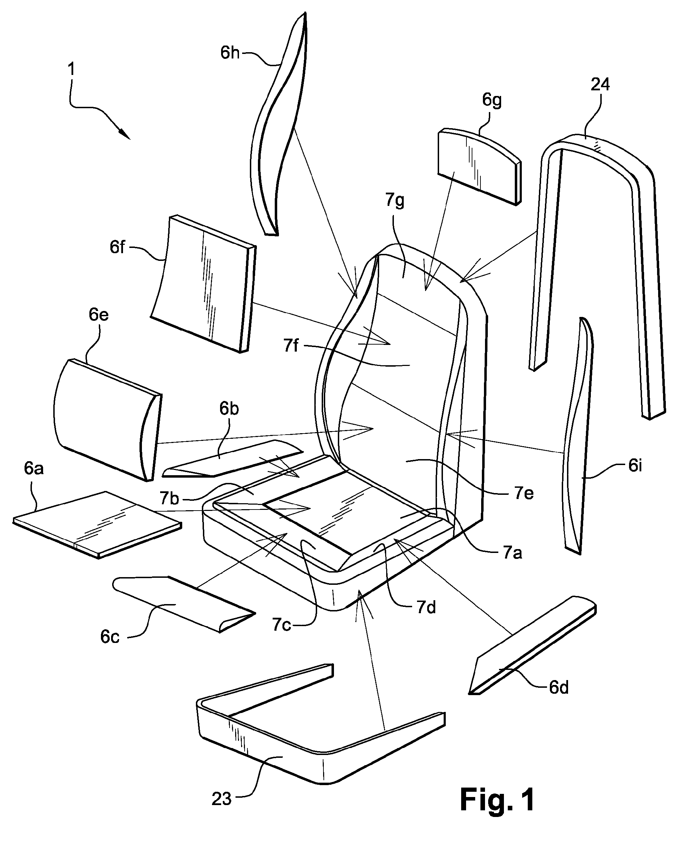

La figure 1 représente une vue en perspective éclatée d'un siège de véhicule automobile, cité à titre d'exemple, selon l'invention, en cours de montage de toutes ses parties constitutives, et plus particulièrement des éléments de confort de la housse avant leur intégration à celle-ci.
La figure 2 est une vue en perspective de dessous d'une housse de véhicule, selon la figure 1, après intégration des éléments de confort et avant montage sur le siège proprement dit.
Les figures 3 et 4 sont des vues en perspective de siège brut obtenu par rotomoulage selon l'invention, respectivement en vue de dessous et en vue de dessus, avant montage de la housse selon la figure 2.
La figure 5 est une vue en perspective de dessus d'un siège équipé d'une housse ayant reçu préalablement les éléments de confort selon les figures précédentes.
La figure 6 est une vue en perspective éclatée d'un siège fini, selon la figure 5, en perspective arrière et de dessous, avant montage d'une plaque de fermeture arrière.

Le siège 1 désigné globalement sur les figures est destiné à tout type de véhicules.

Il comporte accessoirement un appui-tête et/ou au moins un accoudoir (non représentés).

Un tel siège est constitué classiquement d'une assise 2 et d'un dossier 3, monobloc ou articulé entre eux, et comportant des éléments de confort 6.

Un tel ensemble est destiné à être recouvert d'une housse 4.

Selon la caractéristique principale de l'invention, l'assise 2 et le dossier 3 sont formés par une carcasse rigide 5 en matière plastique, réalisés en une ou deux parties, les éléments de confort 6 étant disposés dans des zones déterminées de la housse 4, préalablement à son montage sur la carcasse 5, pour constituer un sous-ensemble déhoussable amovible et interchangeable.

Comme évoqué précédemment, une telle conception a pour avantage de faciliter l'entretien et le remplacement de la housse, éléments de confort compris, et de réaliser une économie d'énergie grâce à la légèreté du siège ainsi obtenu, mais également de réduire les coûts par une facilité de la fabrication de l'assise et de sa housse par un gain des matières premières diverses à mettre en oeuvre.

L'avantage est donc double.

Préférentiellement et d'une manière générale, la carcasse rigide 5 en matière plastique est obtenue de manière monobloc ou en deux parties par moulage.

Préférentiellement, elle est obtenue par rotomoulage.

Selon cette méthode, le moule est composé de deux demi-coquilles en acier ou en aluminium, remplies d'une matière plastique pouvant être un polychlorure de vinyle, un polyéthène, polypropylène, polycarbonate, polyamide, ainsi que tout autre matériau composite.

Le poids de la matière intégrée dans le moule correspond à celui de la pièce à obtenir. Le moule est ensuite fermé et mis en mouvement selon deux axes perpendiculaires.

L'ensemble du moule et de la matière sont chauffés par apport de chaleur par tout moyen de chauffage. Le moule transmet la chaleur à la matière qui fond et se répartit uniformément à l'intérieur du moule pour obtenir un produit final creux. Lorsque la carcasse ainsi obtenue est suffisamment rigide et froide, on extrait la pièce qui reproduit exactement l'architecture intérieure du moule. Selon cette méthode, on peut obtenir une carcasse de siège légère et rigide du fait de sa double paroi, avec une possibilité de remplissage par de la mousse d'une densité différente.

Il est également possible d'obtenir des parois multicouches et de rapporter des inserts ou broches à tout endroit, ou encore de coller toute pièce ou accessoire.

Bien entendu, la carcasse rigide 5 pourrait être obtenue également par d'autres procédés, tels que le thermoformage.

Cette solution est tout à fait viable pour obtenir une carcasse selon l'invention car ce procédé permet d'obtenir des épaisseurs jusqu'à 10 mm, donnant la solidité suffisante et nécessaire à la carcasse 5.

Selon une autre caractéristique importante de l'invention, les éléments de confort 6 sont intégrés à la housse 4 de manière amovible. Mais bien entendu, ils pourraient être également intégrés à ladite housse 4 de manière permanente.

Selon la première possibilité évoquée, les éléments de confort 6 sont intégrés à la housse 4 de manière amovible, par l'intermédiaire de poches 7 rapportées dans des zones déterminées, sur la face interne de la housse 4.

Selon une variante de réalisation, les éléments de confort 6 sont intégrés à la housse 4 de manière permanente, par collage dans des zones déterminées de la face interne de la housse 4.

Selon encore une autre possibilité, les éléments de confort 6 sont intégrés à la housse 4 de manière permanente, par insertion dans des zones déterminées, entre la face interne de la housse 4 et un revêtement de doublage de celle-ci pour constituer une double épaisseur dans laquelle sont pris en sandwich les éléments de confort 6 qui sont immobilisés individuellement par des coutures périphériques.

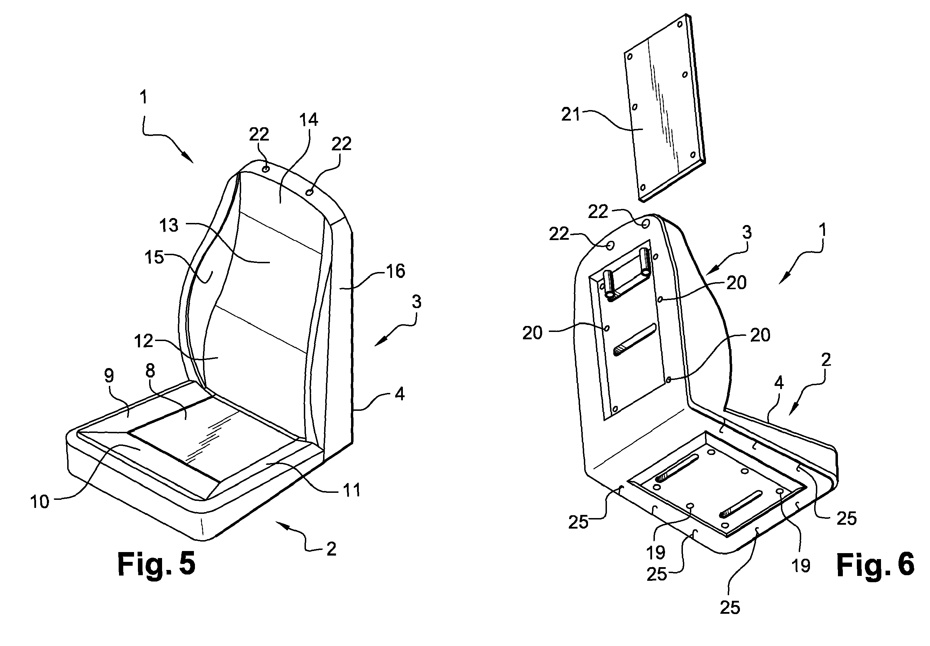

Quel que soit le mode d'intégration des éléments de confort 6 de la housse 4, ceux-ci sont disposés dans des zones déterminées qui sont l'assise centrale 8 et ses zones latérales 9,10,11 ainsi que le dossier central 12,13,14 et ses joues latérales 15,16 (voir figure 5).

Egalement, quel que soit le mode d'intégration des éléments de confort 6, c'est-à-dire qu'ils soient intégrés dans des poches 7 ou pris en sandwich entre deux épaisseurs de housse, les éléments de confort 6 sont constitués, selon un premier exemple, par des coussinets 6a-6i obtenus par moulage de mousses de polyuréthane de densités choisies en fonction des zones 8-16 de la housse 4 dans laquelle ils sont intégrés de manière permanente ou amovible.

Ces zones 8-16 sont choisies en fonction des zones ergonomiques à privilégier.

Les coussinets 6a-6i constituant les éléments de confort 6 sont réalisés selon des épaisseurs et profils ergonomiques en fonction de la zone à laquelle ils sont destinés.

Selon une variante de réalisation, mais intégrant de la même manière que précédemment, les éléments de confort 6 sont obtenus par découpe ou moulage de mousse de polyuréthane de densité choisie en fonction des zones 8-16 de la housse 4 dans laquelle ils sont intégrés de manière permanente ou amovible.

Selon une troisième variante de réalisation des éléments de confort 6, ceux-ci sont constitués par des coussinets gonflables selon des pressions choisies en fonction des zones 8-16 de la housse 4 dans laquelle ils sont intégrés de manière permanente ou amovible.

Selon d'autres caractéristiques à citer, la carcasse 5 obtenue par rotomoulage comporte des nervures de rigidification interne, ou pontage intermédiaire 17,18, réalisé entre les deux parois en cours de rotomoulage.

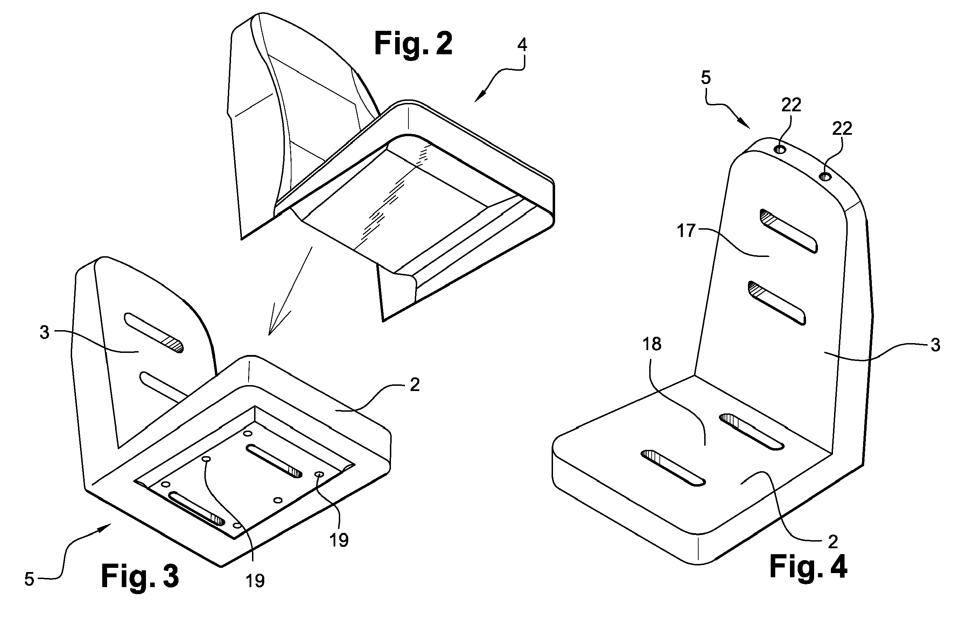

Egalement, comme visible sur les figures 3 et 6, la carcasse rigide 5 comporte à sa base au moins un insert métallique de fixation 19 d'un ensemble rail-glissière, destiné à être fixé sur le plancher du véhicule.

Il pourra s'agir d'inserts ponctuels comme venant d'être évoqué, ou globaux, par exemple constitués par une plaque boulonnée sous l'assise 2.

Selon que le siège sera en une ou deux parties, la housse 4 sera également en une ou deux parties.

Egalement, l'assise 2 pourrait comporter une rigole d'écoulement (non représentée) pour permettre son lavage, sans stagnation d'eau, après démontage de la housse lors d'un entretien du siège.

Comme le montre la figure 6, l'arrière du dossier 3 peut également comporter des inserts 20 permettant de rapporter une plaque de fermeture arrière 21, par vissage par exemple, destinée à supporter par exemple une publicité.

La housse pourra également constituer un élément publicitaire par impression, facilement et économiquement interchangeable, précisément grâce à l'invention.

Il est à noter que le dossier de la carcasse pourra comporter des inserts 22 sur sa partie supérieure, destinés au montage d'un appui-tête pouvant être également conçu comme le siège proprement dit, c'est-à-dire avec une partie rigide obtenue par moulage ou rotomoulage, et d'une housse comportant un élément de confort constitué par un coussinet rapporté à l'intérieur. Il en est de même pour les accoudoirs qui n'ont pas été représentés, mais qui seraient conçus également de la même manière.

La housse 4 ainsi réalisée est amovible grâce à des crochets 25 disposés sous l'assise 2 et derrière le dossier 3, qui permettent l'accrochage de pattes solidaires de la housse, mais cette dernière pourrait être également réalisée en matière élastique pour épouser les contours de l'assise 2 et du dossier 3.

Enfin une bande de tour de finition 23 de l'assise 2 et une bande de tour de finition 24 du dossier 3 sont mises en place pour obtenir une finition soignée du siège.

## Revendications

1. Siège (1) notamment de véhicules, comportant accessoirement un appui-tête et/ou au moins un accoudoir, lequel siège est constitué d'une assise (2) et d'un dossier (3) monobloc ou articulé entre eux et comportant des éléments de confort, l'ensemble étant recouvert d'une housse (4), **caractérisé en ce que** l'assise (2) et le dossier (3) sont formés par une carcasse rigide (5) en matière plastique, réalisés en une ou deux parties, les éléments de confort (6) étant disposés dans des zones déterminées de la housse (4), préalablement à son montage sur la carcasse (5), pour constituer un sous-ensemble déhoussable amovible et interchangeable.

2. Siège selon la revendication 1, **caractérisé en ce que** sa carcasse rigide (5) en matière plastique est obtenue de manière monobloc ou en deux parties par moulage.

3. Siège selon la revendication 1, **caractérisé en ce que** sa carcasse rigide (5) en matière plastique est obtenue de manière monobloc ou en deux parties par rotomoulage.

4. Siège selon la revendication 1, **caractérisé en ce que** sa carcasse rigide (5) en matière plastique est obtenue de manière monobloc ou en deux parties par thermoformage.

5. Siège selon l'une des revendications 1 à 4, **caractérisé en ce que** les éléments de confort (6) sont intégrés à la housse (4) de manière amovible.

6. Siège selon l'une des revendications 1 à 4, **caractérisé en ce que** les éléments de confort (6) sont intégrés à la housse (4) de manière permanente.

7. Siège selon la revendication 5, **caractérisé en ce que** les éléments de confort (6) sont intégrés à la housse (4) de manière amovible, par l'intermédiaire de poches (7) rapportées dans des zones déterminées, sur la face interne de la housse (4).

8. Siège selon la revendication 6, **caractérisé en ce que** les éléments de confort (6) sont intégrés à la housse (4) de manière permanente, par collage dans des zones déterminées de la face interne de la housse (4).

9. Siège selon la revendication 6, **caractérisé en ce que** les éléments de confort (6) sont intégrés à la housse (4) de manière permanente, par insertion dans des zones déterminées, entre la face interne de la housse (4) et un revêtement de doublage de celle-ci pour constituer une double épaisseur dans laquelle sont pris en sandwich les éléments de confort (6) qui sont immobilisés individuellement par des coutures périphériques.

10. Siège selon l'une des revendications 1 à 9, **caractérisé en ce que** les zones déterminées des éléments de confort (6) de la housse (4) sont : l'assise centrale (8) et ses zones latérales (9,10,11) ; le dossier central (12,13,14) et ses joues latérales (15,16).

11. Siège selon l'une des revendications 1 à 10, **caractérisé en ce que** les éléments de confort sont constitués par des coussinets (6a-6i) obtenus par moulage de mousses de polyuréthane de densités choisies en fonction des zones (8-16) de la housse (4) dans laquelle ils sont intégrés de manière permanente ou amovible.

12. Siège selon la revendication 11, **caractérisé en ce que** les coussinets (6a-6i) constituant les éléments de confort (6) sont réalisés selon des épaisseurs et profils ergonomiques en fonction de la zone à laquelle ils sont destinés.

13. Siège selon l'une des revendications 1 à 10, **caractérisé en ce que** les éléments de confort (6) sont obtenus par découpe dans une feuille de mousse de polyuréthane de densité choisie en fonction des zones (8-16) de la housse (4) dans laquelle ils sont intégrés de manière permanente ou amovible.

14. Siège selon l'une des revendications 1 à 10, **caractérisé en ce que** les éléments de confort (6a-6i) sont constitués par des coussinets gonflables selon des pressions choisies en fonction des zones (8-16) de la housse (4) dans laquelle ils sont intégrés de manière permanente ou amovible.

15. Siège selon l'une des revendications 3 et 5 à 14, **caractérisé en ce que** la carcasse (5) obtenue par rotomoulage comporte des nervures de rigidification interne, ou pontage intermédiaire (17,18), réalisé entre les deux parois en cours de rotomoulage.

16. Siège selon l'une des revendications 1 à 15, **caractérisé en ce que** la carcasse rigide (5) comporte à sa base au moins un insert métallique de fixation (19) d'un ensemble rail-glissière, destiné à être fixé sur le plancher du véhicule.
